# FASCICULE DE BREVET EUROPEEN

(11) **EP 0 551 032 B1**
(45) Date de publication et mention de la délivrance du brevet: **28.05.1997**
(21) Numéro de dépôt: 92403340.0
(22) Date de dépôt: 09.12.1992
(51) Int. Cl.: G02B 27/36, G02F 1/13

(54) **Réticule électronique, procédé d'obtention d'une meilleure précision lors de l'emploi d'un réticule électronique, et son application**
Elektronisches Fadenkreuz, Verfahren zur Erlangung einer grösseren Präzision bei dem Gebrauch eines elektronischen Fadenkreuzes, und seine Verwendung
Electronic reticle, method for achieving higher precision during the use of an electronic reticle, and its application

(30) Priorité: 10.01.1992 FR 9200201
(43) Date de publication de la demande: 14.07.1993
(73) Titulaire: ESSILOR INTERNATIONAL, Compagnie Générale d'Optique, F-94028 Créteil Cédex (FR)
(72) Inventeur: Chansavoir, Alain, F-94220 Charenton le Pont (FR); Clara, Philippe, F-94170 Le Perreux (FR); Joncour, Christian, F-94410 Saint Maurice (FR)
(74) Mandataire: Hirsch, Marc-Roger

(56) Documents cités:
- EP-A- 0 115 723
- DE-A- 2 722 018
- GB-A- 1 432 558
- US-A- 3 885 861

## Description

La présente invention a pour objet un réticule de dispositif électronique d'affichage, ainsi qu'un procédé d'obtention d'une meilleure précision lors de l'emploi d'un réticule de dispositif électronique d'affichage. Elle a aussi pour objet l'application d'un tel procédé pour le positionnement avant le débordage d'un verre de lunette par rapport à la monture destinée à le recevoir.

Il existe de nombreux procédés et dispositifs de positionnement relatif de deux objets, grâce auxquels il est possible de placer avec précision un objet par rapport à un autre.

De tels systèmes ont des applications dans de nombreux domaines. Ils peuvent être employés dans la mécanique de précision, pour positionner une pièce à usiner. Ils peuvent aussi être utiles dans l'assemblage de systèmes complexes. Un autre domaine d'application encore est l'optique. Il est nécessaire en optique de placer avec précision verres et lentilles par rapport aux supports qui doivent les recevoir et inversement. Ceci est le cas dans les systèmes optiques complexes, mais doit aussi être réalisé de façon courante par les opticiens qui doivent positionner les verres de lunettes, par rapport aux montures destinées à les recevoir, en fonction des mesures morphologiques des patients. Dans tous ces domaines d'application, se fait sentir le besoin de systèmes de positionnement relatif fiables et peu onéreux. Il existe bien des systèmes connus de l'art antérieur, mais ils ne sont pas entièrement satisfaisants.

Il a été proposé par exemple d'utiliser des écrans, du type écran cathodique ou écran plat, par exemple écran plat à LCD (écran à cristaux liquides). Dans de tels systèmes, les deux objets à positionner sont représentés sur l'écran, et l'opérateur agit de façon à déplacer sur l'écran l'image d'un objet par rapport à l'image du second objet.

Ce système connu présente toutefois de nombreux inconvénients. En particulier, sa précision est intrinsèquement limitée par la taille des pixels de l'écran, soit couramment une dimension de l'ordre de la moitié d'un millimètre. En effet, les repères qui matérialisent l'un des objets sur l'écran ne peuvent pas présenter une épaisseur inférieure à un pixel, même s'ils sont aussi fins que possible.

Dans d'autres systèmes, un des objets à positionner est matérialisé par des repères sur un écran cathodique ou sur un écran plat, les repères s'affichent sur l'écran sous forme d'un ensemble de pixels, constituant un réticule. Le plus généralement, les réticules sont constitués de droites formées par la juxtaposition de pixels contigus. L'autre objet à positionner est matérialisé par un moyen optique adéquat sur l'écran. Il est par exemple matérialisé par deux traits horizontal et vertical formant une croix et projetés sur la surface de l'écran. Il faut noter ici que ce deuxième objet est matérialisé "sur" l'écran, c'est-à-dire non par des pixels de l'écran, mais bien par un moyen externe à l'écran. Ce peut être une projection sur un verre dépoli placé contre l'écran, ou l'objet lui-même, s'il est transparent, peut être posé sur l'écran.

Un tel système est décrit par exemple dans GB-A-1 432 558, qui porte sur un réticule. Ce brevet décrit des moyens d'obtenir une croix dans le plan image d'un appareil optique, comprenant un film de cristaux liquides entre une paire de plaques parallèles pourvues chacune, sur leur face adjacente au film, d'une pluralité de bandes électrodes transparentes. Ces bandes électrodes des deux plaques sont inclinées l'une par rapport à l'autre de façon à définir un système de coordonnées; le système comprend aussi des moyens d'application d'une tension auxdites électrodes, de façon à réaliser un réticule en forme de croix. Le brevet décrit deux types de réticules constitués de deux lignes perpendiculaires, d'une épaisseur d'un pixel. L'intersection des deux lignes est un pixel qui peut, selon le type de réticule, être soit identique aux pixels qui constituent les deux lignes, soit identique aux pixels de fond. Ainsi, si on utilise des cristaux liquides du type le plus courant, transparents au repos, les lignes matérialisant le réticule sont opaques, et le point d'intersection peut, selon le type, être opaque ou transparent.

Ce brevet décrit aussi des moyens de mise en oeuvre d'un tel réticule. Il est possible de le placer dans un plan image entre deux lentilles. On utilise alors un écran à fond transparent et une croix opaque. Alternativement, l'image du réticule peut être projetée dans un plan image par un miroir semi-réfléchissant, auquel cas on utilise un écran opaque et une croix transparente.

Même si ce brevet décrit en détail la structure d'écran ainsi que son mode d'utilisation, il ne permet pas de résoudre les problèmes susmentionnés, à savoir la précision et le positionnement mécanique. En effet, la précision obtenue à l'aide du dispositif décrit reste nécessairement supérieure ou égale à l'épaisseur des traits, à savoir un pixel. En outre, le brevet ne résout aucunement le problème du positionnement de deux objets.

FR-A-2 201 482 décrit un réticule à cristaux liquides à commande numérique de type analogue, constitué aussi par deux plaques portant des électrodes entourant un matériau nématique. Comme dans le précédent brevet anglais, le réticule est constitué de deux lignes perpendiculaires sur l'écran ainsi formé. Ce brevet français ne permet pas non plus de résoudre le problème de la précision, et ne décrit aucunement un mode d'utilisation permettant le positionnement relatif de deux objets.

Enfin, US-A-4 030 109 décrit un appareil de contrôle d'une caméra photogrammétrique qui comprend un verre dépoli et un écran formé de deux feuilles entourant un matériau excitable par l'application d'une tension électrique et qui portent sur leur face interne des électrodes. Il est ainsi possible de faire apparaître sur l'écran des lignes. L'écran est placé adjacent au verre dépoli, ou dans un plan optiquement conjugué.

Ce dispositif est utilisé pour la photogrammétrie, où il sert à contrôler les appareils photographiques pour la prise de vues aériennes. Il est en effet nécessaire de contrôler la superposition des images successives, et ceci se fait en déplaçant sur l'image des réseaux de lignes. L'invention décrite dans ce brevet US ne saurait toutefois s'appliquer au positionnement relatif d'objets fixes, ou dont le mouvement n'est pas rectiligne uniforme.

Ainsi, aucune des solutions décrites dans ces trois brevets ne permet de résoudre les problèmes que pose le positionnement relatif d'objets, tels que décrits plus haut.

Il existe un dispositif commercialisé par la demanderesse, qui assure, avant le débordage, le positionnement relatif d'un verre de lunette par rapport à la monture dans laquelle il doit être monté. Dans ce dispositif, la forme de la monture est matérialisée sur une matrice à cristaux liquide. Le verre est déposé sur une table horizontale XY et son image est projetée sur la matrice à cristaux liquides. Par action sur les commandes de la table XY, un opérateur peut positionner le verre par rapport à la monture, de façon à ce qu'il se trouve dans une position adaptée aux nécessités du centrage et du montage. Cet appareil permet un positionnement simple et précis du verre par rapport à la monture. Toutefois, il reste relativement onéreux et le besoin se fait sentir de systèmes plus précis et moins chers.

La présente invention permet de pallier ces inconvénients de l'art antérieur.

Elle permet en particulier d'obtenir, lors de l'emploi d'un réticule sur un dispositif électronique d'affichage, tel que par exemple un écran LCD, une précision supérieure à celle possible avec les dispositifs de l'art antérieur.

La présente invention propose un réticule de dispositif électronique d'affichage tel que défini dans la revendication 1.

Selon un mode de réalisation du réticule selon l'invention, le dispositif électronique d'affichage est constitué d'une matrice de pixels, et lesdits repères sont constitués de segments de droites.

Il est aussi possible que le dispositif électronique d'affichage soit un écran plat à cristaux liquides.

Selon un autre mode de réalisation du réticule selon l'invention, le réticule est constitué de quatres repères formant une double croix.

L'invention a aussi pour objet un procédé d'obtention d'une meilleure précision lors de l'emploi d'un réticule de dispositif électronique d'affichage, dans lequel on utilise un réticule comportant au moins deux repères susceptibles d'être déplacés parallèlement à eux-mêmes indépendamment les uns des autres, et dans lequel le déplacement dudit réticule sur le dispositif électronique d'affichage s'effectue par déplacement d'une partie des repères, et en alternance du reste des repères.

Dans un mode de mise en oeuvre de ce procédé, les repères comprennent des segments, et le déplacement dudit réticule sur le dispositif électronique d'affichage s'effectue par déplacement d'une partie des repères de façon à augmenter d'un pixel la distance entre les segments, et en alternance par déplacement du reste des repères de façon à réduire d'un pixel la distance entre les segments.

Dans un autre mode de mise en oeuvre de ce procédé, les repères comprennent des segments de droite distants d'un pixel, et le déplacement dudit réticule sur le dispositif électronique d'affichage s'effectue par déplacement d'une partie des repères de façon à faire passer la distance entre les segments à deux pixels, et en alternance par déplacement du reste des repères de façon à ramener la distance entre les segments à un pixel.

On peut aussi prévoir que lesdits repères comprennent des segments de droite distants de trois pixels, et que le déplacement dudit réticule sur le dispositif électronique d'affichage s'effectue par déplacement d'une partie des repères de façon à faire passer la distance entre les segments à deux pixels, et en alternance par déplacement du reste des repères de façon à ramener la distance entre les segments à trois pixels.
Enfin, l'invention a pour objet l'application de ce procédé au positionnement avant le débordage d'un verre de lunette par rapport à la monture destinée à le recevoir, la monture étant matérialisée par ledit réticule électronique sur un dispositif électronique d'affichage, et l'image du verre se projetant sur ledit dispositif ou dans un plan optiquement conjugué.

Les caractéristiques et avantages de la présente invention ressortiront mieux de la description suivante, donnée uniquement à titre d'exemple et en référence aux figures annexées, où:
- la figure 1 illustre l'allure d'un mode de réalisation d'un réticule selon l'invention, sur un exemple d'un dispositif électronique d'affichage;
- les figures 2a, 2b et 2c illustrent de façon schématique trois étapes successives du déplacement d'un réticule selon le procédé selon l'invention;
- la figure 3 montre un diagramme schématique d'un exemple d'application du procédé selon l'invention.

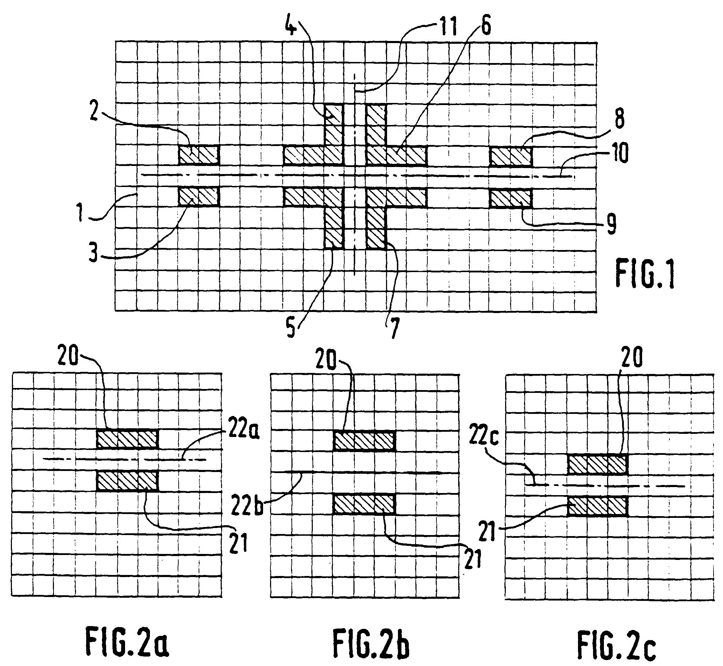

La figure 1 illustre l'allure d'un mode de réalisation possible d'un réticule selon l'invention. Elle montre un dispositif électronique d'affichage, qui est dans le mode de réalisation décrit constitué d'une matrice 1 de cristaux liquides, d'un type connu en soi, et qui se présente sous forme d'un écran plat. De façon classique, un tel écran plat est constitué de deux plaques de verre entourant un matériau nématique, et portant sur leur face interne des électrodes. La mise sous tension de certaines de ces électrodes permet de modifier localement les propriétés du matériau nématique, de manière à faire apparaître un "pixel" sur la matrice. La dimension courante d'un pixel est de l'ordre d'un demi millimètre.

L'écran plat 1 est représenté à la figure 1 avec un réticule selon l'invention. Ce réticule est constitué d'une pluralité de repères 2, 3, 4, 5, 6, 7, 8, 9. Chacun de ces repères est lui même formé par affichage sur le dispositif électronique de plusieurs pixels formant des segments de droite. Les repères 2, 3, 8 et 9 sont formés d'un unique segment horizontal; les repères 4, 5, 6, 7 sont des équerres formées chacune de deux segments horizontal et vertical ayant une extrémité commune qui constitue l'angle de l'équerre. Les équerres 4, 5, 6 et 7 sont disposées de façon à constituer une double croix, c'est-à-dire que leurs angles sont proches les uns des autres.

Les repères du réticule de la figure 1 sont tous constitués de segments d'une épaisseur de 1 pixel. Chacune des équerres 4, 5, 6 et 7 est séparée de ses voisines par une rangée de pixels. On constitue ainsi une double croix d'une épaisseur totale de 3 pixels, qui matérialise un axe horizontal 10 et un axe vertical 11, représentés en traits pointillés sur la figure 1. Un opérateur utilisant le réticule représenté à la figure 1 tend à "viser" à l'aide de ce réticule par rapport aux axes de symétrie de la double croix, i.e. par rapport aux axes 10 et 11.

Les repères ou segments 2, 3 et 8, 9 sont disposés de part et d'autre de la double croix 4, 5, 6 et 7. Les segments 2 et 3, tout comme les segments 8 et 9 sont disposés parallèlement à l'axe horizontal 10, et symétriquement par rapport à celui-ci.

Le réticule de la figure 1 est conçu pour permettre l'alignement par rapport aux axes 10 et 11 d'une mire constituée par exemple d'un trait horizontal et d'un trait vertical. Le trait horizontal est aligné avec l'axe 10 lorsqu'il se trouve entre les segments 2 et 3, entre les équerres 4, 6 et 5, 7, et entre les segments 8 et 9. Le trait vertical est aligné avec l'axe 11 lorsqu'il se trouve entre les équerres 4, 5 et 6, 7. Comme autre exemple, on pourrait utiliser le réticule de la figure 1 pour aligner par rapport aux axes 10 et 11 un verre de lunette avant le débordage. En effet, les verres de lunettes peuvent être marqués de façon à s'adapter parfaitement à un réticule du type de celui représenté à la figure 1: le centre du verre est marqué par une croix et l'axe du verre, s'il est cylindrique, est repéré par deux traits disposés de part et d'autre de cette croix. Ainsi, la croix centrale du verre peut être positionnée grâce à la double croix 4, 5, 6, 7, et les deux traits matérialisant l'axe peuvent être positionnés grâce aux segments 2, 3 et 8, 9. Les verres peuvent aussi être marqués de trois points, ce qui permet d'utiliser des réticules semblables à celui de la figure 1.

L'utilisation sur le réticule de la figure 1 d'une pluralité de repères destinés à être disposés de part et d'autre de l'objet visé permet une plus grande précision de positionnement. Dans l'art antérieur, les réticules de dispositif électronique d'affichage se recouvraient avec les marques de l'objet visé, ce qui diminuait notablement la précision du positionnement.

Il est bien entendu que les repères constituant le réticule du dispositif électronique d'affichage peuvent présenter des formes très diverses. On a illustré à la figure 1 le cas où ces repères sont adaptés à des marques particulières d'un verre de lunette. Les repères pourraient aussi être constitués de pixels isolés, de segments verticaux ou horizontaux, et plus généralement d'un ensemble quelconque de pixels, constituant deux sous-ensembles entre lesquels un opérateur peut chercher à positionner une marque projetée sur le dispositif d'affichage, ou dans un plan optiquement conjugué. On aura compris que les repères constituant le réticule sont choisis en fonction de l'utilisation envisagée, de façon à permettre un positionnement précis dans les directions voulues.

Les divers repères du réticule de la figure 1 sont susceptibles d'être déplacés parallèlement à eux mêmes, indépendamment les uns des autres. Ainsi, il est par exemple possible de déplacer vers le haut les repères 2, 4, 6 et 8, de façon à augmenter la distance qui les sépare des repères 3, 5, 7 et 9 ce qui a pour effet de déplacer corrélativement l'axe 10. De même, il est possible de déplacer vers la droite les repères 6, 7, 8 et 9, de façon à augmenter la distance qui les sépare des repères 2, 3, 4 et 5, ce qui a pour effet de déplacer corrélativement l'axe 11. Il ne s'agit là que de deux exemples, et il est facile d'en imaginer d'autres, qui mettent en oeuvre les propriétés du réticule selon l'invention.

Les figures 2a, 2b et 2c illustrent de façon schématique trois étapes successives du déplacement d'un réticule selon le procédé de l'invention. Les figures 2a, 2b, 2c montrent à titre d'exemple le mouvement vertical d'un réticule constitué de deux segments 20, 21 horizontaux parallèles, mais il est bien évident que le procédé décrit est susceptible d'être utilisé pour le déplacement de tout type de réticule constitué d'une pluralité de repères.

On a représenté sur les figures 2a, 2b et 2c un dispositif électronique d'affichage 1, analogue à celui décrit en référence à la figure 1. Sur ce dispositif 1 sont matérialisés deux segments 20 et 21, d'une épaisseur d'un pixel, horizontaux et parallèles, qui constituent un réticule. A la figure 2a, ces deux segments sont éloignés l'un de l'autre par une distance de 1 pixel, et ils définissent ainsi un axe 22a, sur lequel un opérateur utilisant le réticule 20, 21 aura tendance à s'aligner pour une visée. Comme les segments 20, 21 sont distants d'un pixel, leur axe de symétrie, qui est l'axe 22a passe au milieu d'un pixel.

La figure 2b montre le réticule 20, 21 après une première étape de déplacement selon l'invention. Par rapport à la situation illustrée à la figure 2a, le segment 21 a été déplacé vers le bas d'un pixel, tandis que le segment 20 est resté immobile. La distance entre les segments 20 et 21 est passée à deux pixels. L'axe 22b du réticule s'est corrélativement déplacé vers le bas, d'une distance d'un demi pixel. L'axe 22b passe donc par une ligne séparant deux pixels.

La figure 2c montre le réticule 20, 21 après une deuxième étape de déplacement selon l'invention. Par rapport à la situation illustrée à la figure 2b, le segment 20 a été déplacé vers le bas d'un pixel, tandis que le segment 21 est resté immobile. La distance entre les segments 20 et 21 est donc réduite à un pixel. L'axe 22c du réticule s'est corrélativement déplacé vers le bas, d'une distance d'un demi pixel. L'axe 22c passe de nouveau au milieu d'un pixel.

Ainsi, il apparaît sur les figures 2a, 2b, 2c que l'axe du réticule 20, 21 se déplace dans le procédé selon l'invention avec un pas d'un demi pixel. Il passe de la position 22a à la position 22b, puis à la position 22c. De la sorte, grâce au procédé selon l'invention, il est possible en déplaçant en alternance une partie des repères, puis le reste des repères, de choisir avec une précision d'un demi pixel la position du réticule 20, 21. Cette précision est à comparer à la précision de l'art antérieur, qui ne pouvait être inférieure à un pixel dans les meilleurs cas.

Le procédé selon l'invention permet donc d'obtenir une meilleure précision lors de l'emploi d'un réticule de dispositif électronique d'affichage, et cela à double titre. D'une part, comme on l'a vu en référence à la figure 1, l'utilisation d'une pluralité de repères pour constituer le réticule assure une meilleure précision de visée pour un opérateur qui cherche un alignement entre lesdits repères. D'autre part, le déplacement du réticule selon l'invention permet de choisir la position du réticule avec une précision d'un demi pixel.

Un autre avantage du procédé selon l'invention est sa facilité d'adaptation à des utilisations très diverses, dans lesquelles un opérateur peut avoir besoin d'un réticule de dispositif électronique d'affichage d'une taille variable. La distance entre les différents repères du réticule est initialement de 1 pixel sur la figure 2a. Il est clair qu'elle pourrait tout à fait être supérieure, selon l'utilisation du réticule. La précision du procédé selon l'invention est liée au déplacement en alternance d'une partie des repères, et du reste des repères, de façon à faire varier la distance entre ceux-ci. Par exemple, la distance entre les repères au cours du déplacement du réticule pourrait être initialement de trois pixels, et ensuite passer à deux pixels, revenir à trois pixels, et ainsi de suite. Elle pourrait tout aussi bien augmenter en premier lieu, pour ensuite diminuer.

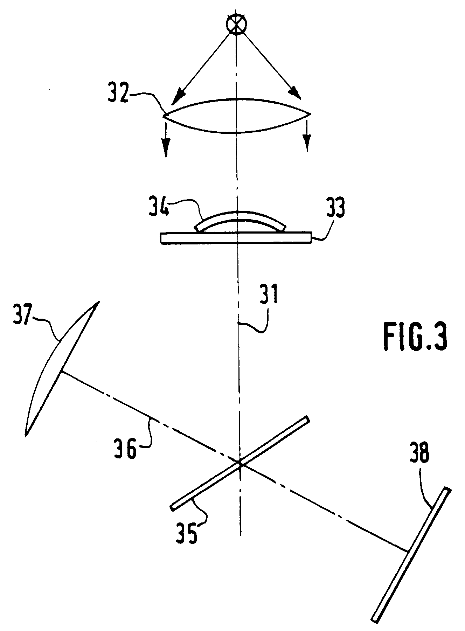

La figure 3 montre un diagramme schématique d'un exemple d'application du procédé selon l'invention, dans le domaine de l'optique. Le dispositif dont le schéma est représenté à la figure 3 est utilisé par les opticiens avant la taille des verres de lunettes. Les verres de lunettes présentent en effet une forme circulaire, et il faut les meuler afin de les adapter à la forme des montures destinées à les recevoir. Il importe en outre que le positionnement du verre à l'intérieur de la monture tienne bien compte des caractéristiques morphologiques du patient.

Ce dispositif comprend sur un premier axe optique 31 sensiblement vertical un ensemble de projection 32, un écran dépoli 33 destiné à supporter un verre 34, et une lame semiréfléchissante 35. Le dispositif a un deuxième axe optique 36, image du premier axe optique 31 par réflexion sur la lame semi- réfléchissante 35. Sur ce second axe optique, on trouve une lentille d'observation 37, la lame semi-réfléchissante 35, et un écran plat LCD 38. L'écran plat LCD 38 comporte un réticule selon l'invention.

Le fonctionnement du dispositif schématisé à la figure 3 est le suivant. Un opérateur regarde par la lentille d'observation 37. A l'aide d'un système de lecture non représenté, par exemple comprenant un palpeur mécanique, l'opérateur enregistre la forme de la monture, qui s'affiche sur l'écran 38. L'opérateur voit l'image par la lentille d'observation 37. Il déplace ensuite le réticule de l'écran 38 par rapport à l'image de la monture, de façon à le placer dans une position correspondant à certaines caractéristiques physiques du porteur des lunettes. Avantageusement, les valeurs de ces caractéristiques physiques peuvent aussi être affichées sur l'écran 38. Les caractéristiques physiques sont par exemple le demi écart pupillaire et la hauteur de montage par rapport au bas de la monture. Le déplacement du réticule s'effectue suivant le procédé selon l'invention, avec une précision d'un demi pixel, soit de l'ordre d'un quart de millimètre.

Une fois le réticule mis en place, l'opérateur pose sur l'écran dépoli 33 un verre de lunette adéquat 34, qu'il positionne en le déplaçant à la main par rapport au réticule de l'écran plat 38. La précision du positionnement est accrue du fait de la structure du réticule, comme on l'a expliqué en référence à la figure 1.

Toutes les opérations décrites ci-dessus sont exécutées le cas échéant par des commandes de l'opérateur sur des commandes non représentées à la figure 3. Le positionnement du verre 34 par rapport à la monture une fois acquis, le verre est transféré de façon connue à une meuleuse pour le débordage. Le procédé peut alors être répété pour un autre verre, par exemple pour le deuxième verre de la monture, ou pour une autre monture

Le réticule décrit en référence à la figure 1 est constitué de segments et d'équerres d'une épaisseur d'un pixel. Il est bien évident que l'on aurait tout aussi bien pu utiliser des éléments d'une épaisseur différente, ou encore combiner dans un même réticule des éléments de différentes épaisseur.

De même, le dispositif décrit en référence à la figure 3 ne constitue qu'un exemple de réalisation d'un dispositif mettant en oeuvre le procédé selon l'invention. La présente invention n'est pas limitée à ce mode de réalisation, et elle est susceptible de nombreuses variantes accessibles à l'homme de l'art sans que l'on ne s'écarte de l'esprit de l'invention.

## Revendications

1. Réticule de dispositif électronique d'affichage, constitué d'une pluralité de repères affichés sur le dispositif d'affichage, caractérisé en ce qu'il comprend dans au moins une direction au moins deux repères (2, 3, 4, 5, 6, 7, 8, 9), susceptibles d'être déplacés parallèlement à eux-mêmes dans ladite direction indépendamment les uns des autres.

2. Réticule selon la revendication 1, caractérisé en ce que ledit dispositif électronique d'affichage est constitué d'une matrice de pixels, et en ce que lesdits repères sont constitués de segments de droites.

3. Réticule selon la revendication 1 ou 2, caractérisé en ce que ledit dispositif électronique d'affichage est un écran plat à cristaux liquides (1).

4. Réticule selon l'une des revendications 1 à 3, caractérisé en ce qu'il est constitué de quatre repères formant une double croix (4, 5, 6, 7).

5. Procédé d'obtention d'une meilleure précision lors de l'emploi d'un réticule de dispositif électronique d'affichage, constitué d'une pluralité de repères affichés sur le dispositif d'affichage, caractérisé en ce que l'on utilise un réticule comportant au moins dans une direction au moins deux repères susceptibles d'être déplacés parallèlement à eux-mêmes dans ladite direction indépendamment les uns des autres, et en ce que le déplacement dudit réticule dans ladite direction sur le dispositif électronique d'affichage (1) s'effectue par déplacement d'une partie (20) des repères, et en alternance par déplacement du reste (21) des repères.

6. Procédé selon la revendication 5, caractérisé en ce que lesdits repères comprennent des segments, et en ce que le déplacement dudit réticule sur le dispositif électronique d'affichage (1) s'effectue par déplacement d'une partie (20) des repères de façon à augmenter d'un pixel la distance entre lesdits segments, et en alternance par déplacement du reste (21) des repères de façon à réduire d'un pixel la distance entre lesdits segments.

7. Procédé selon la revendication 5 ou 6, caractérisé en ce que lesdits repères comprennent des segments de droite distants d'un pixel, et en ce que le déplacement dudit réticule sur le dispositif électronique d'affichage (1) s'effectue par déplacement d'une partie (20) des repères de façon à faire passer la distance entre lesdits segments à deux pixels, et en alternance par déplacement du reste (21) des repères de façon à ramener la distance entre lesdits segments à un pixel.

8. Procédé selon la revendication 5 ou 6, caractérisé en ce que lesdits repères comprennent des segments de droite distants de trois pixels, et en ce que le déplacement dudit réticule sur le dispositif électronique d'affichage (1) s'effectue par déplacement d'une partie des repères de façon à faire passer la distance entre lesdits segments à deux pixels, et en alternance par déplacement du reste des repères de façon à ramener la distance entre lesdits segments à trois pixels.

9. Application du procédé selon l'une quelconque des revendications 5 à 8 pour le positionnement avant le débordage d'un verre de lunette (34) par rapport à la monture destinée à le recevoir, la monture étant matérialisée par ledit réticule électronique sur un dispositif électronique d'affichage (38), l'image du verre (34) se projetant sur ledit dispositif (38) ou dans un plan optiquement conjugué (33).

## Patentansprüche

1. Fadenkreuz einer elektronischen Anzeigevorrichtung gebildet aus einer Mehrzahl von Markierungen, welche an der Anzeigevorrichtung angezeigt sind, dadurch gekennzeichnet, daß es in zumindest einer Richtung zumindest zwei Markierungen (2, 3, 4, 5, 6, 7, 8, 9) umfaßt, welche parallel zueinander in der Richtung und unabhängig voneinander versetzt werden können .

2. Fadenkreuz nach Anspruch 1, dadurch gekennzeichnet, daß die elektronische Anzeigevorrichtung aus einer Pixelmatrize gebildet ist, und daß die Markierungen gebildet sind aus Segmenten von Geraden.

3. Fadenkreuz nach Anspruch 1 oder 2, dadurch gekennzeichnet, daß die elektronische Anzeigevorrichtung ein Flüssigkristallflachbildschirm (1) ist.

4. Fadenkreuz nach einem der Ansprüche 1 bis 3, dadurch gekennzeichnet, daß es gebildet ist aus vier Markierungen, welche ein Doppelkreuz (4, 5, 6, 7) bilden.

5. Verfahren zum Erhalten einer besseren Genauigkeit während der Verwendung eines Fadenkreuzes einer elektronischen Anzeigevorrichtung, gebildet aus einer Mehrzahl von Markierungen, welche an der Anzeigevorrichtung angezeigt sind, dadurch gekennzeichnet, daß ein Fadenkreuz verwendet wird, umfassend zumindest in einer Richtung zumindest zwei Markierungen, welche parallel zueinander in der Richtung und unabhängig voneinander versetzt werden können, und daß die Versetzung des Fadenkreuzes in der Richtung an der elektronischen Anzeigevorrichtung erfolgt durch Versetzen eines Abschnittes (20) der Markierungen, und alternativ durch Versetzungen des Restes (21) der Markierungen.

6. Verfahren nach Anspruch 5, dadurch gekennzeichnet, daß die Markierungen Segmente umfassen und daß die Versetzung des Fadenkreuzes an der elektronischen Anzeigevorrichtung (1) erfolgt durch Versetzen eines Teiles (20) der Markierungen, so daß der Abstand zwischen den Segmenten um ein Pixel erhöht wird, und alternativ durch Versetzen des Restes (21) der Markierungen, so daß der Abstand zwischen den Segmenten um ein Pixel reduziert wird.

7. Verfahren nach Anspruch 5 oder 6, dadurch gekennzeichnet, daß die Markierungen Geradensegmente umfassen, welche um einen Pixel beabstandet sind, und daß die Versetzung des Fadenkreuzes an der elektronischen Anzeigevorrichtung (1) erfolgt durch Versetzen eines Teiles (20) der Markierungen, so daß der Abstand zwischen den Segmenten auf zwei Pixel übergeht, und alternativ durch Versetzen des Restes (21) der Markierungen, so daß der Abstand zwischen den Segmenten auf ein Pixel zurückgeführt wird.

8. Verfahren nach Anspruch 5 oder 6, dadurch gekennzeichnet, daß die Markierungen Geradensegmente umfassen, welche um drei Pixel beabstandet sind, und daß die Versetzung des Fadenkreuzes an der elektronischen Anzeigevorrichtung (1) erfolgt durch Versetzen eines Teiles der Markierungen, so daß der Abstand zwischen den Segmenten auf zwei Pixel übergeht, und alternativ durch Versetzen des Restes der Markierungen, so daß der Abstand zwischen den Segmenten auf drei Pixel zurückgeführt wird.

9. Anwendung des Verfahrens gemäß einem der Ansprüche 5 bis 8 für die Positionierung vor der Beschneidung eines Brillenglases (34) mit Bezug auf das Gestell, welches vorgesehen ist, um es aufzunehmen, wobei das Gestell materialisiert ist durch das elektronische Fadenkreuz an der elektronischen Anzeigevorrichtung (38), wobei das Bild des Glases (34) auf die Vorrichtung (38) oder in eine optisch konjugierte Ebene (33) projiziert ist.

## Claims

1. A cross-hair for an electronic display device constituted by a plurality of reference marks displayed on said display device, characterized in that it comprises, in at least one direction, at least two reference marks (2, 3, 4, 5, 6, 7, 8, 9), able to be moved parallel to each other in said direction, independently of each other.

2. Cross-hair according to claim 1, characterized in that said electronic display device is constituted by a pixel matrix, and that said reference marks are constituted by straight line segments.

3. Cross-hair according to claim 1 or 2, characterized in that said electronic display device is a flat panel liquid crystal display (1).

4. Cross-hair according to one of claims 1 to 3, characterized in that it is constituted by four reference marks forming a double cross (4, 5, 6, 7).

5. Method for obtaining better precision when using an electronic display device cross-hair, constituted by a plurality of reference marks displayed on said display device, characterized in that use is made of a cross-hair comprising, in at least one direction, at least two reference marks able to be moved parallel to each other in said direction, independently of each other and in that displacement of said cross-hair in said direction on said electronic display device (1) is done by moving a portion (20) of said reference marks and, in alternation therewith, moving the remainder (21) of said reference marks.

6. The method according to claim 5, characterized in that said reference marks comprise segments, and in that moving said cross-hair on said electronic display device (1) is achieved by moving a portion (20) of said reference marks to increase by one pixel a distance between said segments, and, in alternation therewith, by moving the remainder (21) of said reference marks thereby reducing by one pixel the distance between said segments.

7. The method according to claim 5 or 6, characterized in that said reference marks comprise straight line segments that are one pixel apart, and in that movement of said cross-hair on said electronic display device (1) is achieved by moving a portion (20) of said reference marks thereby increasing the distance separating said segments to two pixels and, in alternation therewith, moving the remainder (21) of said reference marks thereby reducing the distance between said segments to one pixel.

8. The method according to claim 5 or 6, characterized in that said reference marks comprise straight line segments that are three pixels apart, and in that movement of said cross-hair on said electronic display device (1) is achieved by moving a portion of said reference marks thereby increasing the distance separating said segments to two pixels and, in alternation therewith, moving the remainder of said reference marks thereby reducing the distance between said segments to three pixels.

9. Application of the method according to any one of claims 5 to 8 to the positioning of a spectacle lens (34), prior to trimming the edges thereof as a function of the frame designed to receive it, said frame being materialized by said electronic cross-hair on an electronic display device (38), the image of said lens (34) being projected onto said device (38) or in a conjugate optical plane (33).
